# EUROPÄISCHE PATENTANMELDUNG

(11) **EP 4 361 087 A1**
(43) Veröffentlichungstag der Anmeldung: **01.05.2024**
(21) Anmeldenummer: 23195001.5
(22) Anmeldetag: 04.09.2023
(51) Int. Cl.: B67C 3/02, B67C 3/20, G01F 1/00, B67C 3/00, B65B 1/36, B65B 57/14

(54) **FÜLLSYSTEM UND VERFAHREN ZUM ÜBERWACHEN EINES FÜLLSYSTEMS**

(30) Priorität: 07.09.2022 DE 102022122713
(71) Anmelder: KRONES AG, 93073 Neutraubling (DE)
(72) Erfinder: BECHER, Valentin, 93073 Neutraubling (DE)
(74) Vertreter: v. Bezold & Partner Patentanwälte - PartG mbB

(57) **Zusammenfassung**

Die Erfindung betrifft u.a. ein Füllsystem (10) für eine Behälterbehandlungsanlage. Das Füllsystem (10) weist ein Füllventil (14) und eine Hauptfüllgutquelle (18), die über eine Füllgutleitung (20) mit dem Füllventil (14) verbunden ist, auf. Eine erste Durchflussmesseinrichtung (22) und eine zweite Durchflussmesseinrichtung (24) sind in Reihe in der Füllgutleitung (20) angeordnet. Eine Zusatzfüllgutquelle (30), der ein Dosierventil (34) zugeordnet ist, ist mit der Füllgutleitung (20) verbunden. Eine Steuereinrichtung (50) ist dazu konfiguriert, eine Messung der ersten Durchflussmesseinrichtung (22) und eine Messung der zweiten Durchflussmesseinrichtung (24) zur Fehlererkennung zu vergleichen.

## Beschreibung

### Technisches Gebiet

Die Erfindung betrifft ein Füllsystem für eine Behälterbehandlungsanlage und ein Verfahren zum Überwachen eines Füllsystems.

### Technischer Hintergrund

In Abfüllanlagen für beispielsweise Getränke oder flüssige Nahrungsmittel können flexible Füllsysteme zum Einsatz kommen. Bei derartigen Füllsystemen kann ein Dosage- bzw. Zusatzfüllgut bspw. erst kurz vor dem Füllen oder erst während des Füllens eines Behälters mit einem Hauptfüllgut zusammengebracht bzw. gemischt werden.

Beispielsweise offenbart die EP 3 766 827 A1 ein Füllventil für ein flexibles Füllsystem zum Befüllen eines Behälters mit einem Getränk in einer Getränkeabfüllanlage. Das Füllventil kann einen Ventilgrundkörper aufweisen. Der Ventilgrundkörper weist einen Auslauf, eine Drallkammer, einen Hauptzulauf, der in die Drallkammer mündet, und einen oder mehrere Nebenzuläufe, die in die Drallkammer münden, auf.

Die DE 10 2010 047 883 A1 offenbart ein Verfahren sowie Füllsystem zum Füllen von Behältern mit einem wenigstens eine Hauptkomponente und wenigstens eine Zusatzkomponente aufweisenden Füllgut. Mit einem Flüssigkeitsventil wird eine volumen- und/oder mengengesteuerten Abgabe des Füllgutes gesteuert, und zwar in Abhängigkeit von elektrischen Messsignalen eines ersten Durchflussmessers und eines zweiten Durchflussmessers.

Nachteilig an herkömmlichen, flexiblen Füllsystemen kann sein, dass eine unabhängige Qualitätskontrolle über eine Zusammensetzung des Füllguts im Behälter nur schwierig möglich ist, da das Füllgut erst kurz vor dem Füllen oder während des Füllens gemischt wird. Eine mögliche Technik, die Zusammensetzung zu überprüfen, ist es, die Zusammensetzung des Getränkes in jedem Behälter nach dem Abfüllen zu messen. Dies funktioniert jedoch nur für transparente Behälter, wie z. B. Einweg PET.

Der Erfindung liegt die Aufgabe zu Grunde, eine verbesserte Technik zum flexiblen Füllen zu schaffen, die vorzugsweise eine zuverlässige Befüllung des Behälters mit der gewünschten Zusammensetzung gewährleisten kann.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft ein Füllsystem für eine Behälterbehandlungsanlage. Das Füllsystem weist ein Füllventil zum Füllen eines Behälters auf. Das Füllsystem weist eine Hauptfüllgutquelle, die über eine Füllgutleitung mit dem Füllventil verbunden ist, auf. Das Füllsystem weist eine erste Durchflussmesseinrichtung und eine zweite Durchflussmesseinrichtung, die in Reihe in der Füllgutleitung angeordnet sind, auf. Das Füllsystem weist eine Zusatzfüllgutquelle auf, der ein (z. B. schaltbares) Dosierventil zugeordnet ist und die mit der Füllgutleitung verbunden ist. Das Füllsystem weist eine Steuereinrichtung auf, die dazu konfiguriert ist, eine Messung der ersten Durchflussmesseinrichtung und eine Messung der zweiten Durchflussmesseinrichtung zur Fehlererkennung zu vergleichen.

Vorteilhaft kann durch den Vergleich der Messungen der zwei Durchflussmesseinrichtungen gewährleistet werden, dass Behälter nicht aufgrund einer falschen Messung einer Durchflussmesseinrichtung mit einer falschen Zusammensetzung aus Hauptfüllgut und Zusatzfüllgut befüllt werden. Wenn bspw. erkannt wird, dass die Messungen der zwei Durchflussmesseinrichtungen (z. B. nach Abzug von Messtoleranzen) eine zu große Abweichung aufweisen, kann nicht mehr prozesssicher gewährleistet werden, dass der Behälter mit der gewünschten Zusammensetzung des Füllguts befüllt wird. Die Zusammensetzung kann hierbei unabhängig vom abzufüllenden Behälter im laufenden Betrieb überwacht werden. Vorteilhaft können so bspw. auch alterungsbedingte Verschlechterungen der Messgenauigkeit der Durchflussmesseinrichtungen erkannt und eine Wartung oder Austausch der Durchflussmesseinrichtungen, wenn nötig, ausgelöst werden. Sofern beide Messungen übereinstimmen, kann der Behälter mit einer großen Sicherheit mit der gewünschten Zusammensetzung gefüllt werden. Es ist möglich, dass hierdurch Messungen der Zusammensetzung des Füllguts nach dem Abfüllen weggelassen werden können.

Vorzugsweise ist die Steuereinrichtung ferner dazu konfiguriert, die Messung der ersten Durchflussmesseinrichtung und die Messung der zweiten Durchflussmesseinrichtung zur Fehlererkennung zur Funktionsfähigkeitsbestimmung der ersten Durchflussmesseinrichtung und der zweiten Durchflussmesseinrichtung zu vergleichen.

In einem Ausführungsbeispiel ist die Steuereinrichtung ferner dazu konfiguriert, eine Ausgabeeinrichtung derart zu betreiben, dass eine Information bezüglich der Fehlererkennung an einen Benutzer ausgegeben wird, und/oder das Füllsystem in Abhängigkeit von der Fehlererkennung zu stoppen. Vorteilhaft kann damit ein Benutzer entsprechende Gegenmaßen, z. B. Wartung usw., einleiten und verhindert werden, dass Behälter mit der falschen Zusammensetzung abgefüllt werden.

In einem weiteren Ausführungsbeispiel ist die Steuereinrichtung ferner dazu konfiguriert, ein Behälterfördersystem zum Ausschleusen des befüllten Behälters in Abhängigkeit von der Fehlererkennung zu betreiben. Vorteilhaft kann damit ein mit einer falschen Zusammensetzung befüllter Behälter, z. B. befüllt zum Leeren des Füllventils nachdem der Fehler erkannt wurde, automatisch ausgeschleust werden.

Vorzugsweise kann die Steuereinrichtung ferner dazu konfiguriert sein, das Füllsystem zum Wechseln von der Zusatzfüllgutquelle zu einer anderen Zusatzfüllgutquelle zu betreiben, z. B. in Abhängigkeit von der Fehlererkennung.

In einer Ausführungsform weisen die erste Durchflussmesseinrichtung und die zweite Durchflussmesseinrichtung voneinander unterschiedliche Durchflussmessprinzipien auf. Alternativ oder zusätzlich ist eine von der ersten Durchflussmesseinrichtung und der zweiten Durchflussmesseinrichtung eine magnetisch-induktive Durchflussmesseinrichtung, und die andere von der ersten Durchflussmesseinrichtung und der zweiten Durchflussmesseinrichtung ist eine Ultraschall-Durchflussmesseinrichtung. Vorteilhaft kann damit sichergestellt werden, dass nicht beide Durchflussmesseinrichtung aufgrund desselben (z. B. alterungsbedingten) Messfehlers gleich falsch messen, sodass der Fehler von außen nicht erkennbar wäre.

In einer weiteren Ausführungsform ist die Steuereinrichtung ferner dazu konfiguriert, das Dosierventil in Abhängigkeit von einer Messung (z. B. der Messung bei der Fehlererkennung oder einer weiteren Messung) der ersten Durchflussmesseinrichtung oder einer Messung (z. B. der Messung bei der Fehlererkennung oder einer weiteren Messung) der zweiten Durchflussmesseinrichtung zu betreiben, vorzugsweise zu schließen. Vorteilhaft kann damit bspw. im Normalbetrieb eine Dosiermenge des Zusatzfüllguts genau eingestellt werden.

In einer Ausführungsvariante ist die Zusatzfüllgutquelle über das Füllventil mit der Füllgutleitung verbunden. Optional kann das Dosierventil in einer Verbindung (z. B. Zusatzfüllgutleitung) zwischen der Zusatzfüllgutquelle und dem Füllventil angeordnet sein. Vorteilhaft kann damit das Füllgut direkt im Füllventil, also sehr nah am Behälter, in der gewünschten Zusammensetzung gemischt werden.

In einer weiteren Ausführungsvariante weist das Füllsystem oder das Füllventil eine Mischkammer (z. B. Drallkammer) auf, die Füllgutleitung mündet in die Mischkammer, und die Zusatzfüllgutquelle ist über eine Zusatzfüllgutleitung, die in die Mischkammer mündet, mit der Füllgutleitung verbunden. Optional kann das Dosierventil in der Zusatzfüllgutleitung angeordnet sein. Vorteilhaft kann durch die Mischkammer eine Mischung des Hauptfüllguts und des Zusatzfüllgut in der gewünschten Zusammensetzung noch vor dem Abfüllen verbessert werden, und dies vorzugsweise direkt im Füllventil, also sehr nah am Behälter.

In einem Ausführungsbeispiel ist die Hauptfüllgutquelle eine Wasser-Füllgutquelle oder eine karbonisiertes-Wasser-Füllgutquelle, und/oder die Zusatzfüllgutquelle ist eine Sirup-Füllgutquelle.

In einem weiteren Ausführungsbeispiel weist das Füllsystem ferner mindestens eine weitere Zusatzfüllgutquelle auf, der jeweils ein weiteres Dosierventil zugeordnet ist und die jeweils mit der Füllgutleitung verbunden ist, vorzugsweise über das Füllventil und/oder eine Mischkammer (z. B. des Füllventils).

In einem weiteren Ausführungsbeispiel weist das Füllsystem ferner einen Drucksensor auf, der zum Messen eines Drucks in der Füllgutleitung angeordnet ist. Bevorzugt kann die Steuereinrichtung ferner dazu konfiguriert sein, in Abhängigkeit von dem gemessenen Druck eine Erkennung auf eine Undichtigkeit im Füllsystem durchzuführen (z. B. erkannt aufgrund von unzulässigen Druckwerten, Druckschwankungen oder Druckverläufen usw.). Vorzugsweise kann die Steuereinrichtung ferner dazu konfiguriert sein, eine Ausgabeeinrichtung zum Ausgeben einer Information bezüglich der Erkennung auf die Undichtigkeit an einen Benutzer zu betreiben. Vorteilhaft kann auf diese Weise bspw. die Dichtheit des Dosierventils oder der Dosierventile im laufenden Betrieb untersucht werden. Somit können bspw. falsche Zusammensetzungen des Füllguts beim Abfüllen aufgrund eines undichten Dosierventils, das z. B. nicht mehr vollständig absperrt, verhindert werden.

Es versteht sich, dass der Aspekt der Erkennung auf die Undichtigkeit unabhängig von dem Aspekt der Fehlererkennung durch Vergleich der Messungen der ersten und zweiten Durchflussmesseinrichtung und somit auch unabhängig vom Vorhandensein der ersten und/oder zweiten Durchflussmesseinrichtung ist. Entsprechend betrifft ein weiterer Aspekt der vorliegenden Offenbarung, der mit allen hierin offenbarten Ausführungsbeispielen kombinierbar ist, ein Füllsystem für eine Behälterbehandlungsanlage. Das Füllsystem weist ein Füllventil zum Füllen eines Behälters auf. Das Füllsystem weist eine Hauptfüllgutquelle, die über eine Füllgutleitung mit dem Füllventil verbunden ist, auf. Das Füllsystem weist eine Zusatzfüllgutquelle auf, der ein (z. B. schaltbares) Dosierventil zugeordnet ist und die mit der Füllgutleitung verbunden ist. Das Füllsystem weist ferner einen Drucksensor auf, der zum Messen eines Drucks in der Füllgutleitung angeordnet ist. Das Füllsystem weist eine Steuereinrichtung auf, die dazu konfiguriert ist, in Abhängigkeit von dem gemessenen Druck eine Erkennung auf eine Undichtigkeit im Füllsystem durchzuführen (z. B. erkannt aufgrund von unzulässigen Druckwerten, Druckschwankungen oder Druckverläufen usw.). Vorzugsweise kann die Steuereinrichtung ferner dazu konfiguriert sein, eine Ausgabeeinrichtung zum Ausgeben einer Information bezüglich der Erkennung auf die Undichtigkeit an einen Benutzer zu betreiben.

In einer Ausführungsform weist das Füllsystem ferner ein absperrbares Ventil auf, das in der Füllgutleitung angeordnet ist, vorzugsweise stromabwärts von der ersten Durchflussmesseinrichtung und der zweiten Durchflussmesseinrichtung. Der Drucksensor kann zum Messen des Drucks in einem Leitungsabschnitt der Füllgutleitung zwischen dem absperrbaren Ventil und dem Füllventil angeordnet sein. Vorteilhaft kann die Absperrfunktion die Erkennung auf eine Undichtigkeit im Füllsystem erleichtern.

In einer weiteren Ausführungsform ist das absperrbare Ventil ein Drosselventil mit Absperrfunktion. Vorteilhaft kann damit ein zusätzliches Ventil eingespart werden, da die Absperrfunktion bzw. das Absperrventil direkt in ein ohnehin vorhandenes Drosselventil zum Einstellen eines Durchflusses des Hauptfüllguts integriert werden kann.

In einer weiteren Ausführungsform ist die Steuereinrichtung ferner dazu konfiguriert, die Erkennung auf die Undichtigkeit durchzuführen, während das absperrbare Ventil, das Dosierventil und das Füllventil geschlossen sind.

In einer Ausführungsvariante ist ein Leitungsabschnitt zwischen der Zusatzfüllgutquelle und dem Dosierventil mit einem anderen (vorgebbaren), vorzugsweise höheren, Druck beaufschlagbar als der Leitungsabschnitt der Füllgutleitung zwischen dem absperrbaren Ventil und dem Füllventil. Die Steuereinrichtung kann ferner dazu konfiguriert sein, das Dosierventil als undicht zu erkennen, wenn das absperrbare Ventil, das Dosierventil und das Füllventil geschlossen sind und der gemessene Druck sich dem anderen Druck annähert. Vorteilhaft kann damit unmittelbar ein undichtes Dosierventil identifiziert werden, um bspw. eine spezifische Wartung oder einen spezifischen Austausch veranlassen zu können.

Vorzugsweise kann die Steuereinrichtung ferner dazu konfiguriert sein, eine Ausgabeeinrichtung zum Ausgeben einer Information bezüglich des als undicht erkannten Dosierventils zu betreiben.

In einer weiteren Ausführungsvariante ist die Steuereinrichtung ferner dazu konfiguriert, das Füllsystem derart zu betreiben, dass
- die Füllgutleitung und das Füllventil mit einem Hauptfüllgut aus der Hauptfüllgutquelle gefüllt werden, während das Füllventil geschlossen ist;
- ein Zusatzfüllgut aus der Zusatzfüllgutquelle über das Dosierventil in das Hauptfüllgut zugeführt wird, während das Füllventil geschlossen ist und bis eine weitere Messung der ersten Durchflussmesseinrichtung oder die Messung der ersten Durchflussmesseinrichtung oder eine weitere Messung der zweiten Durchflussmesseinrichtung oder die Messung der zweiten Durchflussmesseinrichtung einen vorgegebenen Grenzwert erreicht; und anschließend
- der Behälter durch Öffnen des Füllventils mit einer Mischung aus dem Hauptfüllgut und dem Zusatzfüllgut gefüllt wird (z. B. während das Dosierventil geschlossen (ist).

Vorzugsweise kann das Füllsystem in einer Behälterbehandlungsanlage zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel, umfasst sein.

Beispielsweise können die Behälter als Flaschen, Dosen, Kanister, Kartons, Flakons usw. ausgeführt sein.

Vorzugsweise kann sich der Begriff "Steuereinrichtung" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Ein weiterer Aspekt der vorliegenden Offenbarung betrifft ein Verfahren zum Überwachen eines Füllsystems (z. B. einer Behälterbehandlungsanlage), vorzugsweise wie hierin offenbart, mit einem Füllventil zum Füllen eines Behälters, einer Hauptfüllgutquelle, die über eine Füllgutleitung mit dem Füllventil verbunden ist, einer ersten Durchflussmesseinrichtung und einer zweite Durchflussmesseinrichtung, die in Reihe in der Füllgutleitung angeordnet sind, und einer Zusatzfüllgutquelle, der ein (z. B. schaltbares) Dosierventil zugeordnet ist und die mit der Füllgutleitung verbunden ist. Das Verfahren weist ein Überwachen einer Funktionsfähigkeit der ersten Durchflussmesseinrichtung und der zweiten Durchflussmesseinrichtung durch Vergleichen einer Messung der ersten Durchflussmesseinrichtung und einer Messung der zweiten Durchflussmesseinrichtung (z. B. mittels einer Steuereinrichtung) auf, vorzugsweise zum Prüfen einer richtigen Zusammensetzung eines Füllguts aus einem Hauptfüllgut aus der Hauptfüllgutquelle und einem Zusatzfüllgut aus der Zusatzfüllgutquelle vor dem Abfüllen des Füllguts in den Behälter. Optional kann das Verfahren ferner ein Überwachen des Füllsystems auf eine Undichtigkeit (z. B. mittels einer Steuereinrichtung) durch Messen eines Drucks in der Füllgutleitung mittels eines Drucksensors aufweisen. Vorzugsweise kann währenddessen das Füllventil, das Dosierventil und ein absperrbares Ventil in der Füllgutleitung geschlossen sein. Alternativ oder zusätzlich kann ein Leitungsabschnitt stromaufwärts von dem Dosierventil mit einem anderen, vorzugsweise höheren, Druck als die Füllgutleitung und/oder das Füllventil beaufschlagt werden. Vorteilhaft können mit dem Verfahren die gleichen Vorteile erzielt werden, die bereits unter Bezugnahme auf das Füllsystem beschrieben wurden.

Vorzugsweise kann das Verfahren ferner ein Ausgeben einer Information bezüglich des Überwachens der Funktionsfähigkeit und/oder des Überwachens auf die Undichtigkeit an einen Benutzer mittels einer Ausgabeeinrichtung aufweisen.

Die zuvor beschriebenen bevorzugten Ausführungsformen und Merkmale der Erfindung sind beliebig miteinander kombinierbar.

### Kurzbeschreibung der Figur

Weitere Einzelheiten und Vorteile der Erfindung werden im Folgenden unter Bezug auf die beigefügte Zeichnung beschrieben. Es zeigt:

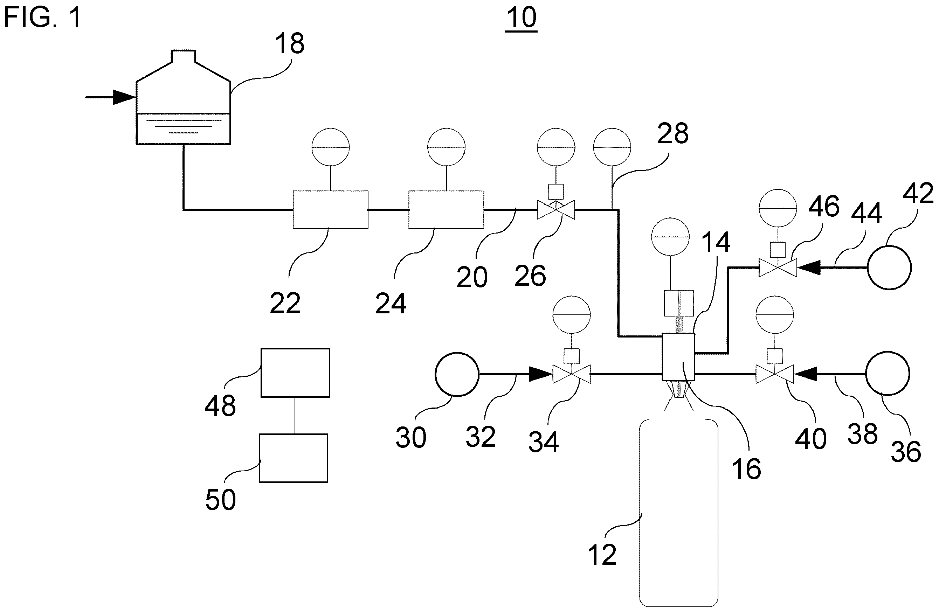

- Figur 1: eine schematische Darstellung eines Füllsystems gemäß einem Ausführungsbeispiel der vorliegenden Offenbarung.

### Detaillierte Beschreibung beispielhafter Ausführungsformen

Die Figur 1 zeigt ein Füllsystem 10.

Bevorzugt ist das Füllsystem 10 in einer Füllvorrichtung zum gleichzeitigen bzw. zeitlich überlappenden Füllen mehrerer Behälter umfasst. Die Füllvorrichtung kann beispielsweise ein Füllerkarussell (Rundläufer-Füller) oder ein Linearfüller sein.

Das Füllsystem 10 weist ein Füllventil 14, eine Hauptfüllgutquelle 18, eine erste Durchflussmesseinrichtung 22, eine zweite Durchflussmesseinrichtung 24, mindestens eine Zusatzfüllgutquelle 30, 36, 42, mindestens ein Dosierventil 34, 40, 46 und eine Steuereinrichtung 50 auf. Optional kann das Füllsystem 10 ferner ein Ventil 26, einen Drucksensor 28 und/oder eine Ausgabeeinrichtung 48 aufweisen.

Das Füllsystem 10 dient zum Füllen von Behältern 12 mit einem, vorzugsweise flüssigen oder pastösen, Füllgut. Das Füllsystem 10 kann beispielsweise in einer Behälterbehandlungsanlage umfasst sein, in der die Behälter 12 beispielsweise auch hergestellt, verschlossen und/oder etikettiert werden können.

Das Füllventil 14 ist zum Befüllen des Behälters 12 ausgebildet. Der Behälter 12 kann unterhalb von dem Füllventil 14 während des Füllens positioniert sein. Es ist möglich, dass der Behälter 12 an das Füllventil 14 während des Füllens angepresst ist oder von dem Füllventil 14 während des Füllens beabstandet ist.

Bevorzugt kann das Füllventil 14 ein Schaltventil sein. Das Füllventil 14 kann bspw. in eine Offenstellung und in eine Schließstellung geschaltet werden. Das Füllventil 14 kann auf jegliche denkbare Weise bestätigt sein, z. B. elektrisch, elektromagnetisch, pneumatisch, hydraulisch oder mechanisch.

Vorzugsweise weist das Füllventil 14 eine Mischkammer 16 auf. In der Mischkammer 16 können unterschiedliche Füllgüter von unterschiedlichen Füllgutquellen miteinander gemischt werden. Bevorzugt können die Füllgüter in der Mischkammer 16 gemischt werden, wenn das Füllventil 14 geschlossen ist. Aus der Mischkammer 16 heraus kann der Behälter 12 gefüllt werden, wenn das Füllventil 14 offen ist. Die Mischkammer 16 kann bspw. als eine Drallkammer ausgeführt sein. Es ist auch möglich, dass die Mischkammer 16 außerhalb des Füllventils 14 an einer anderen Position des Füllsystems 10 angeordnet ist und/oder in einer Füllgutleitung (z. B. 20) des Füllsystems 10 integriert ist. Beispielsweise kann die Mischkammer 16 stromaufwärts des Füllventils 14 angeordnet sein.

Die Hauptfüllgutquelle 18 kann ein, bevorzugt flüssiges oder pastösen, Hauptfüllgut bereitstellen. Beispielsweise kann das Hauptfüllgut in der Hauptfüllgutquelle 18 (zwischen-) gespeichert sein. Beispielsweise kann die Hauptfüllgutquelle 18 als ein Tank, ein Kessel oder ein Reservoir ausgeführt sein. Bevorzugt kann die Hauptfüllgutquelle 18 Wasser oder karbonisiertes Wasser als das Hauptfüllgut bereitstellen.

Die Hauptfüllgutquelle 18 ist über eine Füllgutleitung 20 mit dem Füllventil 14 verbunden. Bevorzugt mündet die Füllgutleitung 20 in die Mischkammer 16. Bevorzugt kann das Hauptfüllgut von der Hauptfüllgutquelle 18 über die Füllgutleitung 20 zu der Mischkammer 16 zugeführt werden.

Die erste Durchflussmesseinrichtung 22 und die zweite Durchflussmesseinrichtung 24 sind in Reihe hintereinander in der Füllgutleitung 20 angeordnet. Beispielsweise kann die zweite Durchflussmesseinrichtung 24 stromabwärts von der ersten Durchflussmesseinrichtung 22 angeordnet sein oder umgekehrt. Die Durchflussmesseinrichtungen 22, 24 können stromabwärts von der Hauptfüllgutquelle 18 angeordnet sein. Die Durchflussmesseinrichtungen 22, 24 können stromaufwärts von dem Füllventil 14 angeordnet sein.

Die Durchflussmesseinrichtungen 22, 24 können einen Durchfluss durch die Füllgutleitung 20 messen, z. B. mengen- und/oder volumenmäßig. Die Durchflussmesseinrichtungen 22, 24 können den Durchfluss jeweils bidirektional messen. Beispielsweise kann der Durchfluss von beiden Durchflussmesseinrichtungen 22, 24 sowohl gemessen werden, wenn Füllgut in Richtung zu dem Füllventil 14 strömt, als auch, wenn Füllgut in einer dazu entgegengesetzten Richtung strömt. Die Durchflussmesseinrichtungen 22, 24 können jeweils ein Messsignal, das den gemessenen Durchfluss angibt, ausgeben, z. B. zu der Steuereinrichtung 50.

Bevorzugt weisen die erste Durchflussmesseinrichtung 22 und die zweite Durchflussmesseinrichtung 24 voneinander unterschiedliche Durchflussmessprinzipien auf. Besonders bevorzugt kann die erste Durchflussmesseinrichtung 22 eine magnetisch-induktive Durchflussmesseinrichtung sein, und die zweite Durchflussmesseinrichtung 24 kann eine Ultraschall-Durchflussmesseinrichtung sein oder umgekehrt.

Das Ventil 26 kann in der Füllgutleitung 20 angeordnet sein. Das Ventil 26 kann bspw. stromabwärts von den Durchflussmesseinrichtungen 22, 24 und stromaufwärts von dem Füllventil 14 angeordnet sein.

Das Ventil 26 kann einen Durchfluss von Füllgut durch die Füllgutleitung 20 steuern (durch Drosselung) und/oder die Füllgutleitung 20 sperren bzw. blockieren. Das Ventil 26 kann bevorzugt ein integriertes Drossel- und Absperrventil bzw. ein Drosselventil mit Absperrfunktionalität sein. Beispielsweise kann das Ventil 26 stufenlos verstellbar sein zwischen einer Schließstellung und einer Maximaloffenstellung. Das Ventil 26 kann auf jegliche Weise betätigt werden, z. B. elektrisch, elektromagnetisch, pneumatisch, hydraulisch oder mechanisch. Es ist bspw. auch möglich, dass ein Drosselventil und separat dazu ein Absperrventil umfasst ist.

Der Drucksensor 28 kann zum Messen eines (Füllgut-) Drucks in der Füllgutleitung 20 angeordnet sein. Bevorzugt kann der Drucksensor 28 zum Messen des Drucks in einem Leitungsabschnitt der Füllgutleitung 20 zwischen dem Ventil 26 und dem Füllventil 14 angeordnet sein. Der Drucksensor 28 kann ein Messsignal, das den gemessenen Druck angibt, ausgeben, z. B. zu der Steuereinrichtung 50.

Die Zusatzfüllgutquelle 30 kann ein, bevorzugt flüssiges oder pastöses, Zusatzfüllgut bzw. Dosagefüllgut bereitstellen. Beispielsweise kann das Zusatzfüllgut in der Zusatzfüllgutquelle 30 (zwischen-) gespeichert sein. Beispielsweise kann die Zusatzfüllgutquelle 30 als ein Tank, ein Kessel, ein Reservoir oder eine Versorgungsleitung ausgeführt sein. Bevorzugt kann die Zusatzfüllgutquelle 30 ein Sirup als das Zusatzfüllgut bereitstellen.

Die Zusatzfüllgutquelle 30 kann mit der Füllgutleitung 20 verbunden sein. Die Zusatzfüllgutquelle 30 kann über eine Zusatzfüllgutleitung 32 mit dem Füllventil 14 und damit mit der Füllgutleitung 20 verbunden sein. Bevorzugt kann die Zusatzfüllgutleitung 32 in die Mischkammer 16 münden. Bevorzugt kann das Zusatzfüllgut von der Zusatzfüllgutquelle 30 über die Zusatzfüllgutleitung 32 zu der Mischkammer 16 zugeführt werden. Es ist bspw. auch möglich, dass die Zusatzfüllgutleitung 32 in die Füllgutleitung 20 stromaufwärts von dem Füllventil 14 mündet, z. B. in einen Leitungsabschnitt zwischen dem Ventil 26 und dem Füllventil 14.

Der Zusatzfüllgutquelle 30 ist das Dosierventil 34 zugeordnet. Beispielsweise kann das Dosierventil 34 in der Zusatzfüllgutleitung 32 angeordnet sein. Das Dosierventil 34 kann stromabwärts von der Zusatzfüllgutquelle 30 angeordnet sein. Das Dosierventil 34 kann stromaufwärts von dem Füllventil 14 angeordnet sein.

Bevorzugt kann das Dosierventil 34 ein Schaltventil sein. Das Dosierventil 34 kann bspw. in eine Offenstellung und in eine Schließstellung geschaltet werden. In der Offenstellung kann das Dosierventil 34 die Zusatzfüllgutleitung 32 zum Passieren für das Zusatzfüllgut freigeben. In der Schließstellung kann das Dosierventil 34 die Zusatzfüllgutleitung 32 sperren bzw. blockieren. Das Dosierventil 34 kann auf jegliche denkbare Weise bestätigt sein, z. B. elektrisch, elektromagnetisch, pneumatisch, hydraulisch oder mechanisch.

Es ist möglich, dass das Füllsystem 10 mehrere Zusatzfüllgutquellen 30, 36, 42 aufweist, z. B. zwei, drei, vier, fünf oder mehr. Die Zusatzfüllgutquellen 30, 36, 42 können gleiche oder unterschiedliche Zusatzfüllgüter aufweisen. Es ist möglich, dass das (gemischte) Füllgut im Behälter 12 Zusatzfüllgüter aus einer, zwei oder mehr Zusatzfüllgutquellen 30, 36, 42 aufweist.

Beispielsweise kann das Füllsystem 10 eine zweite Zusatzfüllgutquelle 36 mit zugeordneter zweiter Zusatzfüllgutleitung 38 und zugeordnetem zweiten Dosierventil 40 umfassen. Es ist ebenfalls möglich, dass das Füllsystem 10 eine dritte Zusatzfüllgutquelle 42 mit zugeordneter dritter Zusatzfüllgutleitung 44 und zugeordnetem dritten Dosierventil 46 umfasst, usw.

Die mindestens eine weitere Zusatzfüllgutquelle 36, 42 kann analog der Zusatzfüllgutquelle 30 ausgeführt sein. Die mindestens eine weitere Zusatzfüllgutleitung 38, 44 kann analog der Zusatzfüllgutleitung 32 ausgeführt sein. Das mindestens eine weitere Dosierventil 40, 46 kann analog dem Dosierventil 34 ausgeführt sein.

Die Ausgabeeinrichtung 48 kann eine Information an einen Benutzer ausgeben, z. B. visuell, akustisch und/oder haptisch. Die Ausgabeeinrichtung 48 kann beispielsweise in einer Benutzerschnittstelle des Füllsystems 10 umfasst sein. Beispielsweise kann die Ausgabeeinrichtung 48 einen Lautsprecher, eine Anzeige und/oder eine Signalleuchte aufweisen. Die Ausgabeeinrichtung 48 kann von der Steuereinrichtung 50 zum Ausgeben einer Information betrieben bzw. angesteuert werden.

Das Füllsystem 10 kann im Normalbetrieb mittels der Steuereinrichtung 50 beispielsweise wie folgt betrieben werden.

Die Füllgutleitung 20 und das Füllventil 14, bevorzugt inklusive der Mischkammer 16, können mit dem Hauptfüllgut aus der Hauptfüllgutquelle 18 gefüllt werden. Hierzu kann bspw. das Ventil 26 geöffnet werden bzw. offen sein. Beim Füllen der Füllgutleitung 20 und des Füllventils 14 kann das Füllventil 14 geschlossen sein.

Das Zusatzfüllgut kann dann durch Öffnen des Dosierventils 34 über die Zusatzfüllgutleitung 32 von der Zusatzfüllgutquelle 30 in das Hauptfüllgut zugeführt werden. Das Zusatzfüllgut kann direkt in die Mischkammer 16 zugeführt werden, um sich mit dem Hauptfüllgut zu mischen. Das Füllventil 14 kann weiterhin geschlossen sein.

Durch das Zuführen des Zusatzfüllguts strömt das Hauptfüllgut rückwärts in der Füllgutleitung 20, da es durch das zusätzliche Volumen des Zusatzfüllguts verdrängt wird. Der Rückwärtsfluss kann von der ersten Durchflussmesseinrichtung 22 und der zweiten Durchflussmesseinrichtung 24 mengen- und/oder volumenmäßig gemessen werden. Das Dosierventil 34 kann solange offen sein, bis eine Messung der ersten Durchflussmesseinrichtung 22 oder eine Messung der zweiten Durchflussmesseinrichtung 24 einen vorgegebenen Grenzwert erreicht. Der vorgegebene Grenzwert kann bspw. eine gewünschte Dosiermenge oder ein gewünschtes Dosiervolumen für das Zusatzfüllgut angeben.

Nach dem Zuführen des Zusatzfüllguts bzw. nach dem Schließen des Dosierventils 34 kann das Füllventil 14 geöffnet werden. Der Behälter 12 kann mit einer Mischung aus dem Hauptfüllgut und dem Zusatzfüllgut aus der Mischkammer 16 gefüllt werden. Hierbei kann die Mischkammer 16 durch nachströmendes Hauptfüllgut ausgespült werden.

Eine Besonderheit der vorliegenden Offenbarung besteht darin, dass die Steuereinrichtung 50 dazu konfiguriert ist, eine Messung der ersten Durchflussmesseinrichtung 22 und eine Messung der zweiten Durchflussmesseinrichtung 24 zur Fehlererkennung zu vergleichen. Vorzugsweise kann damit eine Funktionsfähigkeit der Durchflussmesseinrichtungen 22, 24 bestimmt werden, z. B. im Hinblick auf eine ausreichend genaue Messung. Die Messung der ersten Durchflussmesseinrichtung 22 und die Messung der zweiten Durchflussmesseinrichtung 24 können bevorzugt zum gleichen Zeitpunkt oder im gleichen Zeitraum erfolgen. Vorzugsweise werden die Messungen im Rahmen des Normalbetriebs beim Messen des Rückflusses des Hauptfüllguts beim Eindosieren bzw. Zuführen des Zusatzfüllguts vorgenommen. Bei einer Abweichung zwischen den Messungen, die bspw. oberhalb von einem Toleranzgrenzwert liegt, kann ein Fehler in der Durchflussmessung erkannt werden. Der Vergleich kann beispielsweise einen Wertevergleich und/oder einen Werteverlaufsvergleich aufweisen.

Die Steuereinrichtung 50 kann die Ausgabeeinrichtung 48 zum Ausgeben einer Information bezüglich der Fehlererkennung betreiben. Beispielsweise kann die Ausgabeeinrichtung 50 ausgeben, dass ein Fehler erkannt wurde oder dass kein Fehler erkannt wurde.

Die Steuereinrichtung 50 kann das Füllsystem 10 in Abhängigkeit von der Fehlererkennung stoppen. Beispielsweise kann die Steuereinrichtung 50 das Füllsystem 10 stoppen, wenn ein Fehler erkannt wurde. Das Stoppen des Füllsystems 10 kann beispielsweise ein Anhalten eines Füllerkarussells oder eines Linearfüllers, der das Füllsystem 10 aufweisen kann, aufweisen.

Die Steuereinrichtung 50 kann das Füllsystem 10 zum Ausschleusen des befüllten Behälters 12 in Abhängigkeit von der Fehlererkennung betreiben. Beispielsweise kann die Steuereinrichtung 50 ein dem Füllsystem 10 zugeordnetes Behälterfördersystem derart betreiben, dass derjenige Behälter 12, bei dem es unmittelbar vor oder während des Füllens zu dem erkannten Fehler gekommen ist, ausgeschleust wird.

Zusätzlich oder alternativ zur Fehlererkennung durch Vergleich einer Messung der ersten Durchflussmesseinrichtung 22 und einer Messung der zweiten Durchflussmesseinrichtung 24 kann die Steuereinrichtung 50 in Abhängigkeit von einem gemessenen Druck des Drucksensors 28 eine Erkennung auf eine Undichtigkeit im Füllsystem 10 durchführen. Eine Undichtigkeit kann beispielsweise erkannt werden, wenn der gemessene Druck von einem gewünschten Druck abweicht oder sich ungewünscht über die Zeit verändert.

Bevorzugt kann die Steuereinrichtung die Erkennung auf die Undichtigkeit durchführen, während das Ventil 26, das Dosierventil 34 und das Füllventil 14 geschlossen und die Füllgutleitung 20 gefüllt ist. Die Erkennung kann bspw. während eines Testbetriebs oder während eines Normalbetriebs des Füllsystems 10 durchgeführt werden.

Es kann sogar möglich sein, zu erkennen, ob das Dosierventil 34 undicht ist. Hierzu kann ein Leitungsabschnitt der Zusatzfüllgutleitung 32 zwischen der Zusatzfüllgutquelle 30 und dem Dosierventil 34, also stromaufwärts des Dosierventils 34, mit einem anderen, vorzugsweise höheren, Druck beaufschlagt werden als der Leitungsabschnitt der Füllgutleitung 20 zwischen dem Ventil 26 und dem Füllventil 14, also stromabwärts des Dosierventils 34. Das Dosierventil 34 kann als undicht erkannt werden, wenn das Ventil 26, das Dosierventil 34 und das Füllventil 14 geschlossen sind und der mittels des Drucksensors 28 gemessene Druck sich dem anderen Druck annähert, z. B. steigt oder fällt.

Bei mehreren zu prüfenden Dosierventilen 34, 40, 46 kann das Verfahren nacheinander für die Dosierventile 34, 40, 46 durchgeführt werden, wobei jeweils der Leitungsabschnitt stromaufwärts desjenigen Dosierventils 34, 40, 46, das zu prüfen ist, mit dem anderen (höheren oder niedrigeren) Druck beaufschlagt wird.

Die Steuereinrichtung 50 kann die Ausgabeeinrichtung 48 zum Ausgeben einer Information bezüglich der Erkennung auf die Undichtigkeit betreiben, z. B. ob oder ob keine Undichtigkeit erkannt wurde und/oder bei welchem Dosierventil 34, 40, 46 eine Undichtigkeit erkannt wurde.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Füllventils, der Hauptfüllgutquelle, der ersten Durchflussmesseinrichtung, der zweiten Durchflussmesseinrichtung, der Zusatzfüllgutquelle und/oder der Steuereinrichtung des unabhängigen Anspruchs 1 offenbart.

### Bezugszeichenliste

- 10: Füllsystem
- 12: Behälter
- 14: Füllventil
- 16: Mischkammer
- 18: Hauptfüllgutquelle
- 20: Füllgutleitung
- 22: erste Durchflussmesseinrichtung
- 24: zweite Durchflussmesseinrichtung
- 26: Ventil
- 28: Drucksensor
- 30: (erste) Zusatzfüllgutquelle
- 32: (erste) Zusatzfüllgutleitung
- 34: (erstes) Dosierventil
- 36: zweite Zusatzfüllgutquelle
- 38: zweite Zusatzfüllgutleitung
- 40: zweites Dosierventil
- 42: dritte Zusatzfüllgutquelle
- 44: dritte Zusatzfüllgutleitung
- 46: drittes Dosierventil
- 48: Ausgabeeinrichtung
- 50: Steuereinrichtung

## Patentansprüche

1. Füllsystem (10) für eine Behälterbehandlungsanlage, aufweisend:
ein Füllventil (14) zum Füllen eines Behälters (12);
eine Hauptfüllgutquelle (18), die über eine Füllgutleitung (20) mit dem Füllventil (14) verbunden ist;
eine erste Durchflussmesseinrichtung (22) und eine zweite Durchflussmesseinrichtung (24), die in Reihe in der Füllgutleitung (20) angeordnet sind;
eine Zusatzfüllgutquelle (30), der ein Dosierventil (34) zugeordnet ist und die mit der Füllgutleitung (20) verbunden ist;
eine Steuereinrichtung (50), die dazu konfiguriert ist, eine Messung der ersten Durchflussmesseinrichtung (22) und eine Messung der zweiten Durchflussmesseinrichtung (24) zur Fehlererkennung zu vergleichen.

2. Füllsystem (10) nach Anspruch 1, wobei:
die Steuereinrichtung (50) ferner dazu konfiguriert ist:
- eine Ausgabeeinrichtung (48) derart zu betreiben, dass eine Information bezüglich der Fehlererkennung an einen Benutzer ausgegeben wird; und/oder
- das Füllsystem (10) in Abhängigkeit von der Fehlererkennung zu stoppen.

3. Füllsystem (10) nach Anspruch 1 oder Anspruch 2, wobei
die Steuereinrichtung (50) ferner dazu konfiguriert ist:
- ein Behälterfördersystem zum Ausschleusen des befüllten Behälters (12) in Abhängigkeit von der Fehlererkennung zu betreiben.

4. Füllsystem (10) nach einem der vorherigen Ansprüche, wobei:
die erste Durchflussmesseinrichtung (22) und die zweite Durchflussmesseinrichtung (24) voneinander unterschiedliche Durchflussmessprinzipien aufweisen; und/oder
eine von der ersten Durchflussmesseinrichtung (22) und der zweiten Durchflussmesseinrichtung (24) eine magnetisch-induktive Durchflussmesseinrichtung ist, und die andere von der ersten Durchflussmesseinrichtung (22) und der zweiten Durchflussmesseinrichtung eine Ultraschall-Durchflussmesseinrichtung ist.

5. Füllsystem (10) nach einem der vorherigen Ansprüche, wobei:
die Steuereinrichtung (50) ferner dazu konfiguriert ist, das Dosierventil (34) in Abhängigkeit von einer Messung der ersten Durchflussmesseinrichtung (22) oder einer Messung der zweiten Durchflussmesseinrichtung (24) zu betreiben, vorzugsweise zu schließen.

6. Füllsystem (10) nach einem der vorherigen Ansprüche, wobei:
die Zusatzfüllgutquelle (30) über das Füllventil (14) mit der Füllgutleitung (20) verbunden ist; und optional
das Dosierventil (34) in einer Verbindung zwischen der Zusatzfüllgutquelle (30) und dem Füllventil (14) angeordnet ist.

7. Füllsystem (10) nach einem der vorherigen Ansprüche, wobei:
das Füllsystem (10) oder das Füllventil (14) eine Mischkammer (16) aufweist;
die Füllgutleitung (20) in die Mischkammer (16) mündet;
die Zusatzfüllgutquelle (30) über eine Zusatzfüllgutleitung (32), die in die Mischkammer (16) mündet, mit der Füllgutleitung (20) verbunden ist, und optional
das Dosierventil (34) in der Zusatzfüllgutleitung (32) angeordnet ist.

8. Füllsystem (10) nach einem der vorherigen Ansprüche, wobei:
die Hauptfüllgutquelle (18) eine Wasser-Füllgutquelle oder eine karbonisiertes-Wasser-Füllgutquelle ist; und/oder
die Zusatzfüllgutquelle (30) eine Sirup-Füllgutquelle ist.

9. Füllsystem (10) nach einem der vorherigen Ansprüche, ferner aufweisend:
mindestens eine weitere Zusatzfüllgutquelle (36, 42), der jeweils ein weiteres Dosierventil (40, 46) zugeordnet ist und die jeweils mit der Füllgutleitung (20) verbunden ist, vorzugsweise über das Füllventil (14) und/oder eine Mischkammer (16).

10. Füllsystem (10) nach einem der vorherigen Ansprüche, ferner aufweisend:
einen Drucksensor (28), der zum Messen eines Drucks in der Füllgutleitung (20) angeordnet ist,
wobei die Steuereinrichtung (50) ferner dazu konfiguriert ist:
- in Abhängigkeit von dem gemessenen Druck eine Erkennung auf eine Undichtigkeit im Füllsystem (10) durchzuführen; und optional
- eine Ausgabeeinrichtung (48) zum Ausgeben einer Information bezüglich der Erkennung auf die Undichtigkeit an einen Benutzer zu betreiben.

11. Füllsystem (10) nach Anspruch 10, ferner aufweisend:
ein absperrbares Ventil (26), das in der Füllgutleitung (20) angeordnet ist, vorzugsweise stromabwärts von der ersten Durchflussmesseinrichtung (22) und der zweiten Durchflussmesseinrichtung (24),
wobei der Drucksensor (28) zum Messen des Drucks in einem Leitungsabschnitt der Füllgutleitung (20) zwischen dem absperrbaren Ventil (26) und dem Füllventil (14) angeordnet ist.

12. Füllsystem (10) nach Anspruch 11, wobei:
das absperrbare Ventil (26) ein Drosselventil mit Absperrfunktion ist; und/oder
die Steuereinrichtung (50) ferner dazu konfiguriert ist, die Erkennung auf die Undichtigkeit durchzuführen, während das absperrbare Ventil (26), das Dosierventil (34) und das Füllventil (14) geschlossen sind.

13. Füllsystem (10) nach Anspruch 11 oder Anspruch 12, wobei:
ein Leitungsabschnitt zwischen der Zusatzfüllgutquelle (30) und dem Dosierventil (34) mit einem anderen, vorzugsweise höheren, Druck beaufschlagbar ist als der Leitungsabschnitt der Füllgutleitung (20) zwischen dem absperrbaren Ventil (26) und dem Füllventil (14); und
die Steuereinrichtung (50) ferner dazu konfiguriert ist, das Dosierventil (34) als undicht zu erkennen, wenn das absperrbare Ventil (26), das Dosierventil (34) und das Füllventil (14) geschlossen sind und der gemessene Druck sich dem anderen Druck annähert.

14. Füllsystem (10) nach einem der vorherigen Ansprüche, wobei:
die Steuereinrichtung (50) ferner dazu konfiguriert ist, das Füllsystem (10) derart zu betreiben, dass:
- die Füllgutleitung (20) und das Füllventil (14) mit einem Hauptfüllgut aus der Hauptfüllgutquelle (18) gefüllt werden, während das Füllventil (14) geschlossen ist;
- ein Zusatzfüllgut aus der Zusatzfüllgutquelle (30) über das Dosierventil (34) in das Hauptfüllgut zugeführt wird, während das Füllventil (14) geschlossen ist und bis eine weitere Messung oder die Messung der ersten Durchflussmesseinrichtung (22) oder eine weitere Messung oder die Messung der zweiten Durchflussmesseinrichtung (24) einen vorgegebenen Grenzwert erreicht; und anschließend
- der Behälter (12) durch Öffnen des Füllventils (14) mit einer Mischung aus dem Hauptfüllgut und dem Zusatzfüllgut gefüllt wird.

15. Verfahren zum Überwachen eines Füllsystems (10), vorzugsweise nach einem der vorherigen Ansprüche, mit einem Füllventil (14) zum Füllen eines Behälters (12), einer Hauptfüllgutquelle (18), die über eine Füllgutleitung (20) mit dem Füllventil (14) verbunden ist, einer ersten Durchflussmesseinrichtung (22) und einer zweite Durchflussmesseinrichtung (24), die in Reihe in der Füllgutleitung (20) angeordnet sind, und einer Zusatzfüllgutquelle (30), der ein Dosierventil (34) zugeordnet ist und die mit der Füllgutleitung (20) verbunden ist, wobei das Verfahren aufweist:
Überwachen einer Funktionsfähigkeit der ersten Durchflussmesseinrichtung (22) und der zweiten Durchflussmesseinrichtung (24) durch Vergleichen einer Messung der ersten Durchflussmesseinrichtung (22) und einer Messung der zweiten Durchflussmesseinrichtung (24), vorzugsweise zum Prüfen einer richtigen Zusammensetzung aus einem Hauptfüllgut aus der Hauptfüllgutquelle (18) und einem Zusatzfüllgut aus der Zusatzfüllgutquelle (30) vor dem Abfüllen in den Behälter (12); und optional
Überwachen des Füllsystems (10) auf eine Undichtigkeit durch Messen eines Drucks in der Füllgutleitung (20) mittels eines Drucksensors (28), vorzugsweise:
- während das Füllventil (14), das Dosierventil (34) und ein absperrbares Ventil (26) in der Füllgutleitung (20) geschlossen sind, und/oder
- unter Beaufschlagung eines Leitungsabschnitts stromaufwärts von dem Dosierventil (34) mit einem anderen, vorzugsweise höheren, Druck als die Füllgutleitung (20) und/oder das Füllventil (14).
